(19) Europäisches Patentamt / European Patent Office / Office européen des brevets

(11) **EP 3 266 093 B1**

(12) **FASCICULE DE BREVET EUROPEEN**

(45) Date de publication et mention de la délivrance du brevet:
**30.01.2019 Bulletin 2019/05**

(21) Numéro de dépôt: **16713532.6**

(22) Date de dépôt: **29.02.2016**

(51) Int Cl.:
*H02J 7/00* *(2006.01)*    *H02J 7/34* *(2006.01)*

(86) Numéro de dépôt international:
**PCT/FR2016/050453**

(87) Numéro de publication internationale:
**WO 2016/139412 (09.09.2016 Gazette 2016/36)**

(54) **PROCEDE ET SYSTEME D'ALLOCATION D'UNE REQUETE DE PUISSANCE A UNE PLURALITE DE BATTERIES CONNECTEES EN PARALLELE**

VERFAHREN UND SYSTEM UM EINE VIELZAHL VON PARALLELGESCHALTETEN BATTERIEN ZU ALLOZIEREN

METHOD AND SYSTEM FOR ALLOCATING A POWER REQUEST TO A PLURALITY OF BATTERIES CONNECTED IN PARALLEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **03.03.2015  FR 1551760**

(43) Date de publication de la demande:
**10.01.2018  Bulletin 2018/02**

(73) Titulaire: **Renault S.A.S.**
**92100 Boulogne-Billancourt (FR)**

(72) Inventeurs:
• **CHAZAL, Yann**
**75015 Paris (FR)**
• **TOUSSAINT, Philippe**
**78000 Versailles (FR)**
• **TRINH, Do-Hieu**
**78330 Fontenay-le-Fleury (FR)**
• **UMLAWSKI, Mathieu**
**78000 Versailles (FR)**

(56) Documents cités:
**GB-A- 2 494 187        US-A1- 2004 160 213
US-A1- 2011 025 258**

**EP 3 266 093 B1**

**Description**

La présente invention concerne de façon générale les systèmes de stockage et de restitution d'énergie utilisant plusieurs batteries connectées en parallèle, et plus précisément un procédé et un système d'allocation d'une requête de puissance à une pluralité de batteries comprises dans un tel système de stockage et de restitution d'énergie.

Les besoins de stockage de l'énergie électrique se développent dans le monde. Les systèmes développés doivent répondre à des demandes issues d'un système tiers plus global de gestion d'énergie pour stocker ponctuellement une certaine quantité d'énergie, correspondant par exemple à une opportunité tarifaire particulière, ou à un excédent imprévu de production d'origine renouvelable, ou pour fournir une assistance au réseau électrique en restituant ponctuellement l'énergie stockée, par exemple pour lisser une pointe de consommation, ou pour compenser un déficit dans la production attendue d'énergies renouvelables.

Ces besoins s'expriment sous la forme d'une puissance $P_{REQ}$, d'absorption ou de restitution selon les cas, demandée au système de stockage pendant une durée donnée, et donc d'une quantité d'énergie associée.

Par nature, ces besoins ne sont pas obligatoirement ordonnés (alternance de phases de stockage et de déstockage) et peuvent excéder les capacités forcément limitées d'un système de stockage. Ainsi, par exemple, lorsque les batteries d'un système de stockage sont toutes complètement chargées, la puissance absorbable, et a fortiori l'énergie absorbable par le système, sont nulles. Le système n'est donc plus disponible pour une requête de puissance d'absorption supplémentaire.

Certaines architectures connues comportent des batteries qui sont directement reliées en parallèle à un même bus électrique. L'inconvénient de ces architectures réside dans le fait que seule la puissance globale peut être contrôlée, et se répartir entre les batteries selon leur impédance interne. Dans ce cas, la batterie la plus vieillie du système va en premier conduire à limiter la puissance exploitable, et interdire ainsi d'exploiter les pleines possibilités des autres batteries.

D'autres architectures préférées comprennent une pluralité de batteries connectées en parallèle mais pilotables individuellement.

Le document US 2012/0249048 décrit par exemple une telle architecture dans laquelle on peut choisir une ou plusieurs batteries à faire fonctionner pour répondre à une requête de puissance. Le principal inconvénient du système décrit dans ce document est qu'il s'attache à répondre à la requête, sans tenir compte de la préservation de la disponibilité globale du système.

La présente invention a pour objet, entre autres, de pallier l'inconvénient précédent.

Le document US-A-2011/0025258 divulgue un procédé et un système pour la planification des charges et décharges d'une pluralité de modules de batteries dans un pack de batteries rechargeable. Pour cela, ce document propose d'utiliser l'état de charge. La présente invention propose quant à elle d'utiliser une puissance minimale.

Pour ce faire, l'invention a pour objet un procédé d'allocation d'une requête de puissance $P_{REQ}$ à une pluralité de batteries connectées en parallèle selon la revendication 1, le procédé comportant :

- une étape de détermination d'une combinaison de batteries, parmi ladite pluralité de batteries, optimisée pour répondre à la requête de puissance en utilisant le plus grand nombre possible de batteries ;
- une étape d'allocation d'un niveau de puissance à chacune des batteries de ladite combinaison optimisée;
- l'étape de détermination d'une combinaison de batteries optimisée détermine ladite combinaison à partir d'une puissance minimale Pmin(i) requise pour le fonctionnement associée à chaque batterie i ;
- l'étape de détermination d'une combinaison de batteries optimisée détermine la combinaison comportant le plus grand nombre de batteries i pour laquelle la relation suivante est vérifiée :

$$P_{REQ} > \Sigma\, P_{min}(i)$$

avec $P_{min}(i)$ la puissance minimale associée à chaque batterie i de la combinaison.

- l'étape de détermination d'une combinaison de batteries optimisée inclut avantageusement, à partir d'une combinaison d'origine comportant l'ensemble des batteries i, de procéder successivement au retrait d'une batterie de la combinaison jusqu'à ce que la relation suivante soit vérifiée :

$$P_{REQ} > \Sigma\, P_{min}(i)$$

- les batteries sont de préférence retirées successivement par ordre décroissant de leur puissance minimale de fonctionnement associée ;
- l'étape de détermination d'une combinaison de batteries optimisée peut comporter une sous-étape préalable de priorisation par laquelle on impose qu'une ou plusieurs batteries, dites prioritaires, de la pluralité de batteries, fassent partie de la combinaison optimisée ;
- on peut imposer la relation suivante pour chaque batterie i prioritaire :

$$P_{min}(i) = P_{max}(i)$$

dans laquelle $P_{max}(i)$ est la puissance maximale possible pour une batterie i.
- l'étape d'allocation d'un niveau de puissance à chacune des batteries de ladite combinaison optimisée peut comporter la détermination pour chaque batterie i de la combinaison, d'une puissance P(i) selon la relation :

$$P(i) = P_{min}(i) + (M(i)/\Sigma M(i)) * (P_{REQ} - \Sigma P_{min}(i) )$$

dans laquelle M(i) est la marge de fonctionnement de la batterie i.
- le procédé comprend de préférence une étape préalable lors de laquelle on compare la requête de puissance $P_{REQ}$ à la puissance minimale requise pour le fonctionnement des batteries. L'étape préalable peut inclure de déterminer si la relation suivante est vérifiée :

$$P_{REQ} > Min (P_{min}(i))$$

avec $P_{min}(i)$ la puissance minimale requise pour le fonctionnement d'une batterie i.

La présente invention a également pour objet un système d'allocation d'une requête de puissance $P_{REQ}$ à une pluralité de batteries connectées en parallèle d'un système de stockage d'énergie électrique selon la revendication 10.

L'invention et les avantages qu'elle procure seront mieux compris au vu de la description suivante, faite en référence aux figures annexées, dans lesquelles :

- la figure 1 illustre schématiquement un exemple d'architecture pour l'allocation d'une requête de puissance à une pluralité de batteries connectées en parallèle, conformément à l'invention ;
- la figure 2 représente un exemple de succession d'étapes qui peuvent être mises en oeuvre conformément à la présente invention.

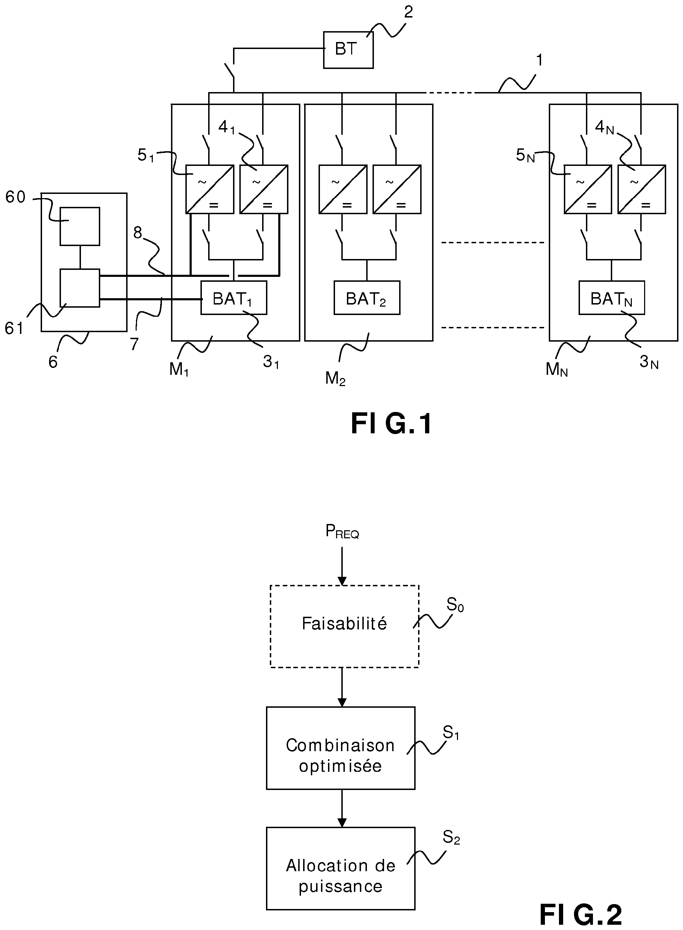

En référence à la figure 1, on considère un système de stockage et de restitution d'énergie électrique comportant N modules $M_1$ à $M_N$ connectés en parallèles sur une même ligne, par exemple un Bus électrique 1, elle-même relié au réseau électrique basse tension 2. Le nombre N de modules n'est théoriquement pas limité, et varie en pratique entre 2 et 12. Chaque module $M_i$ comporte une batterie $3_i$, et une électronique de puissance pilotable associée composée principalement :

- d'une part, d'un onduleur $4_i$ qui permet de décharger la batterie $3_i$, et donc de restituer une certaine quantité d'énergie, et
- d'autre part, d'un chargeur $5_i$ qui permet de charger la batterie $3_i$ avec l'électricité du réseau 2, et donc de stocker une certaine quantité d'énergie.

Pour ne pas surcharger inutilement la figure 1, seuls les éléments essentiels des modules de stockage et de restitution $M_1$ et $M_N$ portent des références sur cette figure.

L'architecture comporte en outre un système 6 de contrôle global qui permet de :

- piloter indépendamment chaque module $M_i$ pour lui faire réaliser une puissance choisie, compatible avec les limites courantes de la batterie considérée
- coordonner la puissance demandée à chaque module $M_i$ pour répondre à une demande globale reçue par le système de stockage.

Dans l'exemple représenté, le système 6 de contrôle global comporte essentiellement un module de contrôle 60 et un module d'interface 61 pour relier le système 6, de préférence par des liaisons 7 et 8 de données série de type CAN ou ModBus, d'une part, à chaque batterie $3_i$, et d'autre part à chaque onduleur $4_i$ et chargeur $5_i$. Ici encore, par

souci de simplification, seules les liaisons entre le module d'interface 61 et le module de stockage et de restitution d'énergie $M_1$ ont été représentées.

De nombreux interrupteurs présents sur la figure illustrent le fait que chaque batterie est pilotable de façon indépendante pour stocker de l'énergie électrique en provenance du réseau 2 ou pour restituer une énergie stockée préalablement à ce réseau 2, tout ceci sous le contrôle du système 6 de contrôle global.

Dans le cas d'un système de stockage composé en interne de plusieurs batteries pilotables indépendamment (c'est-à-dire non reliées à un même BUS électrique), les quantités d'énergie disponibles sont-elles aussi limitées.

Toutefois, la présente invention repose sur le fait qu'il est possible d'éviter au maximum que certaines de ces batteries n'arrivent prématurément dans un état extrême de fonctionnement (plein ou vide par exemple) dans lequel elles deviendraient indisponibles. En effet, leur indisponibilité provoque non seulement une limitation de l'énergie disponible, mais également de la puissance mobilisable. Il importe donc de piloter le remplissage de chaque batterie, de manière à préserver le plus possible les puissances exploitables pour le système de stockage.

Dans la suite de l'exposé, les notations suivantes seront utilisées pour chaque module Mi de batterie :

- $P_{min}(i)$ est la puissance minimale requise pour le fonctionnement du module. Cette puissance minimale correspond à un courant minimal en-dessous duquel il n'est pas possible de mesurer le courant avec suffisamment de précisions pour effectuer une régulation correcte. Cette puissance minimale est une donnée constructeur qui peut être avantageusement stockée dans une table (non représentée) du système 6 de contrôle global ;
- $P_{max}(i)$ est la puissance maximale possible pour le fonctionnement du module. Cette puissance correspond à la valeur miminum entre la puissance maximum acceptée par l'électronique de puissance de chaque module Mi et la puissance maximum acceptée par la batterie. Cette puissance maximale est variable, en particulier en fonction de la température. Chaque contrôleur (non représenté) de la batterie $3_i$, et de l'électronique de puissance $4_i$, 5i envoie par les liaisons 7, 8 leur valeur de puissance maximum acceptée. Le système 6 de contrôle global est donc en mesure de connaître la valeur $P_{max}(i)$ ;
- $SOC(i)$ est l'état de charge de la batterie dans le module $M_i$. Chaque contrôleur (non représenté) de batterie $3_i$ envoie par la liaison 7 la valeur de l'état de charge ;
- $M(i)$ est la marge du module $M_i$, et correspond à la différence entre Pmax(i) et Pmin(i) ;
- $P(i)$ est la puissance attribuée à chaque module $M_i$ par le système 6 de contrôle global pour répondre à une requête en puissance $P_{REQ}$, qu'il s'agisse d'une requête de stockage d'énergie ou de restitution d'énergie.

Le procédé d'allocation des puissances P(i) entre les modules $M_i$, mis en oeuvre par le système 6 de contrôle global pour répondre à une requête en puissance $P_{REQ}$, a pour objectif d'optimiser la disponibilité des modules $M_i$ pour pouvoir offrir à tout moment le service le plus complet possible. Ce procédé va se dérouler en plusieurs étapes, schématisées sur la figure 2, comportant:

- une étape optionnelle $S_0$ de faisabilité ;
- une étape $S_1$ de détermination d'une combinaison optimisée de modules parmi la pluralité de modules $M_i$, de façon à utiliser le plus grand nombre possible de modules pour répondre à la requête ; et
- une étape $S_2$ lors de laquelle chaque modules Mi de la combinaison optimisée précédente se voit alloué une puissance P(i).

L'étape $S_0$ de faisabilité permet de s'assurer que la requête reçue $P_{REQ}$ entre bien dans les possibilités physiques du système de stockage et de restitution d'énergie électrique. Comme indiqué précédemment, il existe une valeur de puissance minimale $P_{min}(i)$ pour pouvoir mettre un module $M_i$ en fonctionnement. Plus qu'une contrainte physique des composants du module $M_i$, cette valeur correspond à un minimum imposé pour assurer une fiabilité à la réalisation des requêtes acceptées. En effet, des puissances trop faibles ne permettraient pas d'assurer une précision suffisante pour répondre aux critères de satisfactions du service proposé.

Une requête est considérée comme non réalisable si la puissance demandée $P_{REQ}$ ne répond à ce critère pour aucun des modules composant le système.

Le critère de faisabilité peut donc être décrit sous la forme suivante : la puissance $P_{REQ}$ demandée dans la requête doit être supérieure à la plus petite des puissances minimales requises pour le fonctionnement d'un des modules composant le système. Autrement dit, il faut au moins un module $M_i$ apte à réaliser la requête. Ceci se traduit par la relation suivante :

$$P_{REQ} > Min\ (P_{min}(i))$$

Si, lors de l'étape $S_0$, le module de contrôle 60 détermine que la relation précédente n'est pas vérifiée, alors la requête sera considérée comme non réalisable et sera refusée. Dans le cas contraire, le procédé continue par l'étape 61.

Lors de cette étape, le système 6 de contrôle global doit trouver, parmi la pluralité de modules $M_i$, la meilleure combinaison possible qui permettra d'utiliser simultanément le plus possible de modules $M_i$ pour répondre à la requête. Pour ce faire, un certain nombre de critères peuvent être avantageusement inspectés :

Selon un premier critère, et outre l'objectif principal d'optimisation des disponibilités proposées par le système, on peut imposer des priorités sur certains modules Mi. Par exemple, il peut s'agir de donner priorité aux batteries dont on souhaite tester la capacité résiduelle, ce type de test nécessitant de charger complètement puis décharger complètement ladite batterie, au maximum de sa puissance. Dans un cas particulier nullement limitatif, on imposera qu'un module prioritaire devra utiliser sa puissance maximale pour chaque réalisation.

Autrement dit, un module Mi prioritaire sera tel que :

$$P_{min}(i) = P_{max}(i)$$

Dans d'autres cas plus généraux, on imposera une puissance de fonctionnement Pchoi(i) à un module prioritaire Mi, de sorte que l'on aura la relation :

$$P_{min}(i) = P_{max}(i) = P_{choi}(i)$$

Dans une sous-étape de l'étape $S_1$, on vérifie avantageusement que le ou les modules dits « prioritaires » peuvent bien être utilisés pour la réalisation de la requête reçue, dont nous savons déjà, par l'étape $S_0$, qu'elle est réalisable. Le premier test à effectuer dans ce cadre est basé sur la même considération que précédemment mais en considérant les caractéristiques du ou des modules prioritaires comme une contrainte additionnelle. En effet, l'objectif est de regarder si, en utilisant le(s) module(s) prioritaire(s), la requête est toujours réalisable:

$$P_{REQ} > Somme(P_{Choi}(j)) + Min ( P_{min}(i) )$$

$$Avec\ i\ différent\ de\ j$$

A titre d'exemple non limitatif, considérons que seul le module $M_1$ est un module prioritaire pour lequel on impose $P_{min}(1) = P_{max}(1)$.

La relation précédente qu'il conviendra de vérifier devient alors :

$$P_{REQ} > P_{Choi}(1) + Min ( P_{min}(i) )$$

$$Avec\ i\ différent\ de\ 1$$

Cela revient à s'assurer que si nous utilisons le module prioritaire $M_1$, le "reste" de la requête qui est constitué de la différence entre la puissance demandée $P_{REQ}$ et la puissance du module prioritaire $P_{max}(1)$ peut toujours être réalisée par au moins un des autres modules.

Si le module de contrôle 60 détermine que la relation précédente n'est pas vérifiée, le module prioritaire ne sera pas considéré lors de l'allocation des puissances, ce qui signifie en d'autres termes que le module $M_1$ sera exclu de la combinaison optimisée. Dans le cas contraire, le module prioritaire $M_1$ sera forcément utilisé lors de l'allocation des puissances. Il fera donc partie obligatoirement de la combinaison optimisée déterminée à l'issue de l'étape $S_1$, et ne pourra plus en être retiré.

Une fois que les modules prioritaires, s'ils existent, ont été traités, l'étape $S_1$ se poursuit dans la recherche de la meilleure combinaison possible en terme de nombre de modules: Pour respecter l'objectif global de disponibilité résiduelle du système, le système 6 de contrôle global va essayer, conformément à l'invention, de faire participer le plus de modules possibles (hors critères de priorité précédent). Le premier test consiste à vérifier si tous les modules peuvent être mis à contribution, autrement dit si la requête $P_{REQ}$ est bien supérieure à la somme de puissances minimales requises au fonctionnement de chaque module (en fonction du résultat de la sous-étape précédente, les systèmes prioritaires sont considérés ou non dans le calcul). Cela se traduit par la relation suivante :

$$P_{REQ} > \sum P_{min}(i)$$

Si le module de contrôle 60 détermine que cette relation est vérifiée, tous les modules seront mis à contribution et le module de contrôle 60 pourra passer à l'étape suivante $S_2$ pour calculer la puissance allouée à chacun.

Dans le cas contraire, on procède au retrait successif des modules du calcul jusqu'à avoir une réponse positive au test précédent. On rappelle que le retrait ne peut concerner un module prioritaire. Parmi les modules non prioritaires restant, les retraits sont définis selon un certain ordre, de préférence en retirant un module à chaque itération, les modules étant retirés par ordre décroissant de $P_{min}(i)$, soit d'abord le $P_{min}$ le plus élevé parmi les modules non prioritaires.

Des critères additionnels de retrait peuvent être également utilisés, notamment dans les situations où deux modules donnés présentent des valeurs $P_{min}$ très proches (typiquement+/- 200W). Dans ce cas, on préférera retirer le module $M_i$ dont la batterie présente un état de charge SOC(i) qui favoriserait un vieillissement plus rapide. Pour ce faire, le système 6 de contrôle global dispose d'une table (non représenté), indiquant les zones de vieillissement pour chaque batterie $3_i$. En fonction du sens de la requête (stockage ou restitution), le système 6 pourra exclure la batterie dont la valeur d'état de charge est la plus éloignée des valeurs de SOC redoutées.

A titre d'exemple, considérons que l'état de charge d'un premier module 1 est de 30%, que l'état de charge d'un deuxième module est de 70% et que la valeur redoutée pour ces deux systèmes est de 50%. La différence entre le SOC des modules et la valeur redoutée est la même (20%). Dans ce cas, on considère le sens de la requête. Si c'est une requête de stockage, cela augmenterait l'état de charge du module choisi. Le premier module se rapprocherait alors de la valeur redoutée alors que le deuxième module s'en éloignerait. On choisira alors de conserver le deuxième module. Le raisonnement est le même en cas de requête de restitution, mais dans ce cas, on choisira de conserver le premier module.

A l'issue de l'étape $S_1$, le système 6 de contrôle global dispose donc de la combinaison optimisée des modules qui devront être utilisés pour répondre à la requête $P_{REQ}$.

La dernière étape $S_2$ consiste à déterminer la puissance P(i) qu'il conviendra d'allouer à chaque module $M_i$ de la combinaison.

Il s'agit ici de calculer pour chaque module $M_i$ de la combinaison une contribution qui sera égale à sa puissance minimale de fonctionnement $P_{min}(i)$ additionnée à une puissance proportionnelle à la marge de puissance M(i) offerte par le module $M_i$ concerné. On rappelle que la marge de puissance d'un module désigne son rayon de possibilité de fonctionnement, autrement dit la différence entre ses puissances maximum et minimum de fonctionnement:

$$M\,(i) = P_{max}(i) - P_{min}(i)$$

M(i) = 0 pour un module Mi prioritaire.

La partie additionnelle de puissance allouée à un module correspond donc au ratio entre la marge offerte par le module concerné et la marge totale offerte par l'ensemble des modules présents dans la combinaison retenue (ce ratio étant ensuite appliqué à la puissance « restante » da la requête, une fois toutes les puissances minimales requises $P_{min}$ allouées). La formule d'allocation finale pour chaque module $M_i$ de la combinaison retenue peut donc s'exprimer sous la forme:

$$P(i) = P_{min}(i) + (M(i)/\Sigma M(i)) * (P_{REQ} - \Sigma P_{min}(i)\,)$$

Avec i représentatif des modules Mi retenus dans la combinaison.

Le principe d'allocation de puissance décrit ci-dessus et associé à l'architecture de la figure 1, dans laquelle chaque batterie peut être pilotée indépendamment, permet d'utiliser au maximum le potentiel de chaque batterie.

De plus, même en cas d'indisponibilité d'un module, en raison par exemple d'une opération de maintenance sur une batterie, le système continue de fonctionner avec les batteries encore disponibles, en ré allouant les requêtes au mieux.

Le système est en outre facilement évolutif. Ainsi, si les besoins de stockage d'une installation évoluent et augmentent, il est aisé d'ajouter un module de stockage et de restitution supplémentaire, en conservant la même logique d'allocation. S'il s'avère nécessaire de changer une batterie dans un sous-système, la même logique d'allocation va tenir compte des limites communiquées par la nouvelle batterie, de manière à ajuster la répartition.

L'invention est applicable à tout système de stockage multi-batteries, indépendamment de leur provenance, et de sa destination.

**Revendications**

1.  Procédé d'allocation d'une requête de puissance $P_{REQ}$ à une pluralité de batteries ($M_1,...M_N$) connectées en parallèle, le procédé comportant :

    - une étape ($S_1$) de détermination d'une combinaison de batteries, parmi ladite pluralité de batteries ($M_1,...M_N$),
    - une étape ($S_2$) d'allocation d'un niveau de puissance à chacune des batteries de ladite combinaison optimisée,

    **caractérisé en ce que** la combinaison est optimisée pour répondre à la requête de puissance en utilisant le plus grand nombre possible de batteries, à partir d'une puissance minimale Pmin(i) requise pour le fonctionnement associée à chaque batterie $M_i$.

2.  Procédé selon la revendication 1, **caractérisé en ce que** l'étape ($S_1$) de détermination d'une combinaison de batteries optimisée détermine la combinaison comportant le plus grand nombre de batteries i pour laquelle la relation suivante est vérifiée :

    $$P_{REQ} > \sum P_{min}(i)$$

    avec $P_{min}(i)$ la puissance minimale associée à chaque batterie i de la combinaison.

3.  Procédé selon la revendication 2, **caractérisé en ce que** l'étape ($S_1$) de détermination d'une combinaison de batteries optimisée inclut, à partir d'une combinaison d'origine comportant l'ensemble des batteries i, de procéder successivement au retrait d'une batterie de la combinaison jusqu'à ce que la relation suivante soit vérifiée :

    $$P_{REQ} > \sum P_{min}(i)$$

4.  Procédé selon la revendication 3, **caractérisé en ce que** les batteries sont retirées successivement par ordre décroissant de leur puissance minimale de fonctionnement associée.

5.  Procédé selon l'une quelconque des revendications 1 à 4, **caractérisé en ce que** l'étape ($S_1$) de détermination d'une combinaison de batteries optimisée comporte une sous-étape préalable de priorisation par laquelle on impose qu'une ou plusieurs batteries, dites prioritaires, de la pluralité de batteries, fassent partie de la combinaison optimisée.

6.  Procédé selon la revendication 5, **caractérisé en ce qu'**on impose la relation suivante pour chaque batterie i prioritaire :

    $$P_{min}(i) = P_{max}(i)$$

    dans laquelle $P_{max}(i)$ est la puissance maximale possible pour une batterie i.

7.  Procédé selon l'une quelconque des revendications précédentes, **caractérisé en ce que** l'étape ($S_2$) d'allocation d'un niveau de puissance à chacune des batteries de ladite combinaison optimisée comporte la détermination pour chaque batterie i de la combinaison, d'une puissance P(i) selon la relation :

    $$P(i) = P_{min}(i) + (M(i)/\sum M(i)) * (P_{REQ} - \sum P_{min}(i))$$

    dans laquelle M(i) est la marge de fonctionnement de la batterie i.

8.  Procédé selon l'une quelconque des revendications précédentes, comportant une étape préalable ($S_0$) lors de laquelle on compare la requête de puissance $P_{REQ}$ à la puissance minimale requise pour le fonctionnement des batteries ($M_1,...M_N$).

9.  Procédé selon la revendication 8, **caractérisé en ce que** ladite étape préalable ($S_0$) inclut de déterminer si la relation suivante est vérifiée :

$$P_{REQ} > \mathrm{Min}\,(P_{min}(i))$$

avec $P_{min}(i)$ la puissance minimale requise pour le fonctionnement d'une batterie i.

10. Système d'allocation d'une requête de puissance $P_{REQ}$ à une pluralité de batteries ($M_1,...M_N$) connectées en parallèle d'un système de stockage d'énergie électrique, comportant un système (6) de contrôle global apte à:

- déterminer une combinaison de batteries, parmi ladite pluralité de batteries ($M_1,...M_N$), ;
- allouer un niveau de puissance à chacune des batteries de ladite combinaison optimisée
- **caractérisé en ce que** la combinaison est optimisée pour répondre à la requête de puissance en utilisant le plus grand nombre possible de batteries, à partir d'une puissance minimale Pmin(i) requise pour le fonctionnement associée à chaque batterie $M_i$.

**Patentansprüche**

1. Zuweisungsverfahren einer Leistungsanforderung $P_{REQ}$ zu einer Vielzahl von parallelgeschalteten Batterien ($M_1, ... M_N$), wobei das Verfahren aufweist:

- einen Schritt ($S_1$) der Bestimmung einer Kombination von Batterien unter der Vielzahl von Batterien ($M_1, ... M_N$),
- einen Schritt ($S_2$) der Zuweisung eines Leistungspegels zu jeder der Batterien der optimierten Kombination,

**dadurch gekennzeichnet, dass** die Kombination optimiert wird, um der Leistungsanforderung zu entsprechen, indem die größtmögliche Anzahl von Batterien verwendet wird, ausgehend von einer jeder Batterie $M_i$ zugeordneten, für den Betrieb erforderlichen Mindestleistung $P_{min}(i)$.

2. Verfahren nach Anspruch 1, **dadurch gekennzeichnet, dass** der Schritt ($S_1$) der Bestimmung einer optimierten Kombination von Batterien die Kombination bestimmt, die die größte Anzahl von Batterien i aufweist, für die die folgende Beziehung erfüllt ist:

$$P_{REQ} > \Sigma\ P_{min}(i)$$

mit $P_{min}(i)$ der jeder Batterie i der Kombination zugeordneten Mindestleistung.

3. Verfahren nach Anspruch 2, **dadurch gekennzeichnet, dass** der Schritt ($S_1$) der Bestimmung einer optimierten Kombination von Batterien ausgehend von einer Ausgangskombination, die die Einheit der Batterien i aufweist, das aufeinanderfolgende Entfernen einer Batterie aus der Kombination umfasst, bis die folgende Beziehung erfüllt wird:

$$P_{REQ} > \Sigma\ P_{min}(i)$$

4. Verfahren nach Anspruch 3, **dadurch gekennzeichnet, dass** die Batterien nacheinander in abnehmender Reihenfolge ihrer zugeordneten Mindestbetriebsleistung entfernt werden.

5. Verfahren nach einem der Ansprüche 1 bis 4, **dadurch gekennzeichnet, dass** der Schritt ($S_1$) der Bestimmung einer optimierten Kombination von Batterien einen vorhergehenden Teilschritt der Priorisierung aufweist, durch den vorgegeben wird, dass eine oder mehrere prioritär genannte Batterien der Vielzahl von Batterien Teil der optimierten Kombination sind.

6. Verfahren nach Anspruch 5, **dadurch gekennzeichnet, dass** die folgende Beziehung für jede prioritäre Batterie i vorgegeben wird:

$$P_{min}(i) = P_{max}(i)$$

wobei $P_{max}(i)$ die maximal mögliche Leistung für eine Batterie i ist.

7. Verfahren nach einem der vorhergehenden Ansprüche, **dadurch gekennzeichnet, dass** der Schritt ($S_2$) der Zuweisung eines Leistungspegels zu jeder der Batterien der optimierten Kombination die Bestimmung für jede Batterie i der Kombination einer Leistung P(i) gemäß der folgenden Beziehung aufweist:

$$P(i) = P_{min}(i) + (M(i)/\Sigma M(i)) * (P_{REQ} - \Sigma P_{min}(i))$$

wobei M(i) der Betriebsbereich der Batterie i ist.

8. Verfahren nach einem der vorhergehenden Ansprüche, das einen vorhergehenden Schritt ($S_0$) aufweist, während dessen die Leistungsanforderung $P_{REQ}$ mit der für den Betrieb der Batterien ($M_1$, ... $M_N$) erforderlichen Mindestleistung verglichen wird.

9. Verfahren nach Anspruch 8, **dadurch gekennzeichnet, dass** der vorhergehende Schritt ($S_0$) umfasst, zu bestimmen, ob die folgende Beziehung erfüllt ist:

$$P_{REQ} > Min(P_{min}(i))$$

mit $P_{min}(i)$ der für den Betrieb einer Batterie i erforderlichen Mindestleistung.

10. System zur Zuweisung einer Leistungsanforderung $P_{REQ}$ zu einer Vielzahl von parallelgeschalteten Batterien ($M_1$, ... $M_N$) eines Speichersystems elektrischer Energie, das ein globales Steuersystem (6) aufweist, das fähig ist:

- eine Kombination von Batterien unter der Vielzahl von Batterien ($M_1$, ... $M_N$) zu bestimmen;
- jeder der Batterien der optimierten Kombination einen Leistungspegel zuzuweisen;

**dadurch gekennzeichnet, dass** die Kombination optimiert wird, um der Leistungsanforderung zu entsprechen, indem die größtmögliche Anzahl von Batterien verwendet wird, ausgehend von einer jeder Batterie $M_i$ zugeordneten, für den Betrieb erforderlichen Mindestleistung $P_{min}(i)$.

**Claims**

1. Method for allocating a power request $P_{REQ}$ to a plurality of batteries ($M_1$,...$M_N$) connected in parallel, the method including:

- a step ($S_1$) of determining a combination of batteries, from said plurality of batteries ($M_1$,...$M_N$),
- a step ($S_2$) of allocating a power level to each of the batteries of said optimized combination,

**characterized in that** the combination is optimized to meet the power request by using the greatest possible number of batteries
on the basis of a minimum power Pmin(i), required for operation, that is associated with each battery $M_i$.

2. Method according to Claim 1, **characterized in that** the step ($S_1$) of determining an optimized combination of batteries determines the combination including the greatest number of batteries i for which the following relationship is satisfied:

$$P_{REQ} > \Sigma\ P_{min}(i)$$

where $P_{min}(i)$ is the minimum power associated with each battery i of the combination.

3. Method according to Claim 2, **characterized in that** the step ($S_1$) of determining an optimized combination of batteries includes, on the basis of an original combination including all of the batteries i, successively removing one battery from the combination until the following relationship is satisfied:

$$P_{REQ} > \Sigma \; P_{min}(i)$$

4. Method according to Claim 3, **characterized in that** the batteries are removed successively in decreasing order of their associated minimum operating power.

5. Method according to any one of Claims 1 to 4, **characterized in that** the step ($S_1$) of determining an optimized combination of batteries includes a preliminary sub-step of prioritization in which it is prescribed that one or more batteries, termed priority batteries, of the plurality of batteries form part of the optimized combination.

6. Method according to Claim 5, **characterized in that** the following relationship is prescribed for each priority battery i:

$$P_{min}(i) \; = \; P_{max}(i)$$

in which $P_{max}(i)$ is the maximum power possible for a battery i.

7. Method according to any one of the preceding claims, **characterized in that** the step ($S_2$) of allocating a power level to each of the batteries of said optimized combination includes determining, for each battery i of the combination, a power P(i) according to the relationship:

$$P(i) \; = \; P_{min}(i) \; + \; (M(i)/\Sigma M(i)) \; * \; (P_{REQ} \; - \; \Sigma P_{min}(i))$$

in which M(i) is the operating margin of the battery i.

8. Method according to any one of the preceding claims, including a preliminary step ($S_0$) during which the power request $P_{REQ}$ is compared with the minimum power required for the batteries ($M_1,...M_N$) to operate.

9. Method according to Claim 8, **characterized in that** said preliminary step ($S_0$) includes determining whether the following relationship is satisfied:

$$P_{REQ} > Min \; (P_{min}(i))$$

where $P_{min}(i)$ is the minimum power required for a battery i to operate.

10. System for allocating a power request $P_{REQ}$ to a plurality of batteries ($M_1,...M_N$), connected in parallel, of an electrical energy storage system, including an overall control system (6) able to:

    - determine a combination of batteries, from said plurality of batteries ($M_1,...M_N$),
    - allocate a power level to each of the batteries of said optimized combination on the basis of a minimum power $Pmin(i)$, required for operation, that is associated with each battery $M_i$.

**FIG.1**

**FIG.2**

## RÉFÉRENCES CITÉES DANS LA DESCRIPTION

**Documents brevets cités dans la description**

- US 20120249048 A
- US 20110025258 A